# EUROPEAN PATENT APPLICATION

(11) **EP 1 466 822 A2**
(43) Date of publication of application: **13.10.2004**
(21) Application number: 03028310.5
(22) Date of filing: 09.12.2003
(51) Int. Cl.: B62J 15/02

(54) **Device for fixing and quick releasing the support stays of a bicycle's mudguard**

(30) Priority: 08.04.2003 IT vr20030042
(71) Applicant: Orion-Italy Componenti Biciclette Srl, 35013 Cittadella (PD) (IT)
(72) Inventor: Favaro, Andrea, 31050 Cavasagra di Vedelago (IT)
(74) Representative: Petraz, Gilberto Luigi

(57) **Abstract**

A device (10) for the coupling and rapid release of the support stays of a bicycle mudguard comprises a base element (11) which can be attached to the fork of a bicycle, and a coupling element (12) for a pair of stays designed to support a mudguard; the base element comprises a substantially spherical head (13) designed to cooperate with a conjugated cavity (19) cut in the coupling element (12).

## Description

### TECHNICAL FIELD

This invention concerns an improved device for the coupling and rapid release of the support stays of a bicycle mudguard.

More in particular, this invention refers to a coupling device that can advantageously uncouple and move out of the way in the event of an accident so as not to cause injury to the cyclist.

This invention can be mainly applied in the manufacturing industry of bicycles and components for bicycles.

### BACKGROUND ART

It is known that a mudguard of an ordinary bicycle is generally fixed to the forks of the respective wheel by means of stays.

There is at least one of these stays for each edge of the mudguard and they are fixed in various ways to the forks and to the mudguard with means usually consisting of snap-fit couplings and, in some cases, by screw threads.

Since lightness is considered to be an important feature of a bicycle, particularly complex couplings and devices are awkward as they are too large and too heavy.

The need to provide means of rapid release may imply the addition of components that make the coupling device expensive also as regards production costs.

The rapid release of the stays must be ensured so that, due to the impact force consequent to an accident or fall, they are prevented from remaining partly attached to the respective fork with their opposite end pointing towards the cyclist.

This situation is due to the breakage or the detachment of the portion of the rod proximal to the mudguard, which becomes a dangerous blunt or sharp object for the cyclist.

To overcome this risk, various solutions have already been proposed foreseeing automatic release devices in the presence of impulsive forces consequent to impact.

See on this topic European patent no. 803429 according to which the coupling device comprises a pair of separate elements in moulded plastic material, the first element presenting a housing designed to accommodate at least one rod, while the second element is equipped with a hole designed to cooperate with a ring constrained to the fork of the bicycle.

See also European patent no. 694469 which foresees a coupling device that comprises a box-type element designed to house an eyelet at the end of a rod held in position by a pair of elastic loading elements present on two opposite walls of the box-type element.

Another solution describes a coupling device consisting of a pair of elements in plastic, designed to enclose and restrain the support stays of a bicycle mudguard inside the space defined by the reciprocal superimposition of this pair of elements.

These elements are arranged on the same plane as the respective stays and thus on a plane parallel to the plane of the bicycle wheel.

On the basis of the position when in use, an element defined as posterior presents a conformation such that it can internally accommodate the support stays, following the profile at their end portion facing the fork.

The other element of the pair, defined as anterior, is positioned in such a way as to make its outer profile match the profile of the posterior element, covering the stays from the opposite side to the one already occupied by the posterior element.

While this solution resolves a number of problems especially as regards the heaviness of the device and the risks connected with guaranteeing a reliable release of the stays in the event of an accident, it does not completely resolve the problems described above.

In fact, the stays, fixed to the device and to the respective mudguard, lie rigidly on a plane allowing minimal adaptations during assembly and above all when in use, due to the configuration and composition of the coupling device.

### DESCRIPTION OF THE INVENTION

This invention proposes to provide a device for the coupling and rapid release of the support stays of a bicycle mudguard and which can eliminate or significantly reduce the disadvantages described above.

This invention also proposes to provide a coupling device that can be easily produced in order to be economically advantageous.

This is achieved by means of an improved device for the coupling and rapid release of the support stays of a bicycle mudguard with the characteristics described in the main claim.

The dependent claims describe advantageous embodiments of the invention.

The improved device for the coupling and rapid release of the support stays of a bicycle mudguard according to the invention comprises a base element, which can be constrained to the fork of a bicycle, equipped with a substantially spherical head and a coupling element, for a pair of stays designed to support a mudguard, presenting one end equipped with a housing designed to accommodate and restrain the substantially spherical head and the opposite end having a slot providing access to a cavity equipped with means for clamping the stays.

According to the invention, the coupling device is made from composite plastic material obtained by moulding.

Advantageously, the opening of the housing designed to accommodate the head has a slightly smaller diameter than the diameter of the housing , so as to constitute, together with the spherical head of the base element, a snap-fit coupling that is achieved thanks to the deformability of the plastic material.

Advantageously, the two stays consist of a single body bent to form a "U" inside the cavity of the coupling element.

Moreover, according to a preferred embodiment, the slot provides access to a pre-chamber presenting a width which gradually decreases from the outside towards the inside of the coupling element in order to allow easy insertion and housing of the stays in the cavity.

According to another preferred embodiment of this invention, the means for clamping the stays to the coupling element consist of a protruding tab overlapping part of the cavity and equipped, at its free end, with an enlargement protruding towards the inside of the cavity.

The insertion of the stays inside the coupling element is achieved by inserting the "U" shaped portion inside the slot.

When this portion comes into contact with the enlargement, the stays are pushed causing the tab to lift and bend towards the outside until the curved portion touches the bottom of the cavity. At this point, no longer pressed by the stays, the tab drops back towards the cavity, imprisoning the stays inside the coupling element with the enlargement.

The spherical head of the base element together with the housing of the coupling element form an articulated joint which ensures adaptation of the stays along planes that are not necessarily parallel to the plane of the respective wheel; in this way the coupling device allows a considerable reduction of the stress induced by any rigidity of the structure.

Moreover, in the event of an accident, the articulated joint ensures an immediate release of the coupling element from the base element, preventing the ends of the stays proximal to the mudguard from becoming free and pointing dangerously towards the cyclist.

### DESCRIPTION OF THE DRAWINGS

Other features and advantages of the invention will become evident on reading the following description of one embodiment of the invention, given as a non-binding example, with the help of the enclosed drawings, in which:
- figure 1a shows a prospective schematic view of a base element of a device according to the invention;
- figure 1b shows a cross-section of the element in figure 1a;
- figure 2a shows a prospective schematic view of a variation of a base element of a device according to the invention;
- figure 2b shows a cross-section of the element in figure 2a;
- figure 3 shows a prospective schematic view of a coupling device according to the invention;
- figure 4 shows a prospective schematic view of the element in figure 3;
- figure 5 shows a plan and cross-section view of the element in figure 3; and
- figure 6 is an elevated side and cross-section view of the element in figure 3.

### DESCRIPTION OF ONE EMBODIMENT

In the figures, the reference number 10 indicates in general a coupling device, in the case in question a device 10 for the coupling and rapid release of the support stays of a bicycle mudguard.

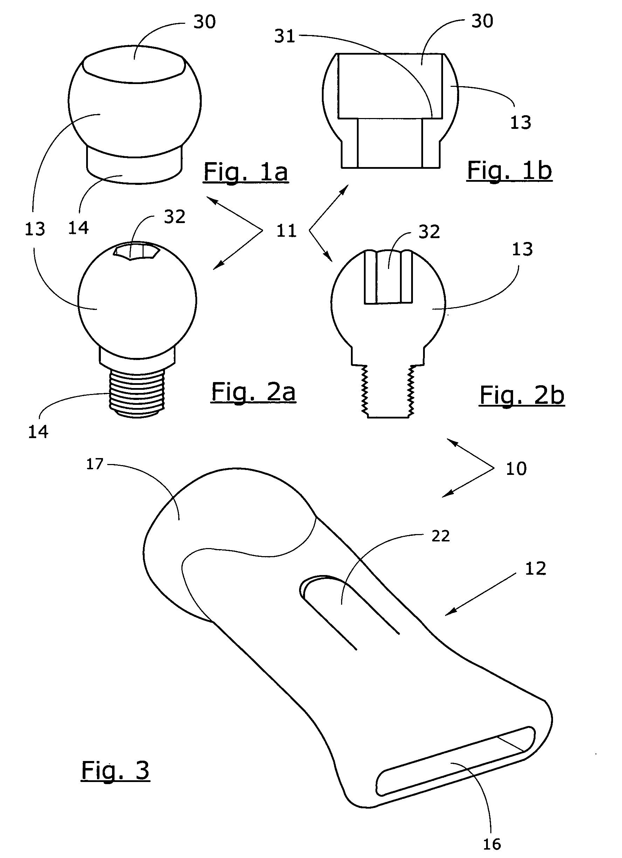

With reference first to figures 1a, 1b, 2a, 2b and 3 the device 10 consists of a base element 11 and a coupling element 12, it being possible to constrain the base element 11 to the coupling element 12 when in use.

The base element 11 consists of a substantially spherical head 13 equipped with a shank 14 connecting it to a means of coupling to the fork of the bicycle; this coupling means can consist of an eyelet or a nut screw or similar.

In the example shown in figures 1a and 1b, the base element 11 has an inner through hole 30 and a shoulder 31 designed to form a support for the head of a screw (not shown) which is fixed, with the interposition of another element if necessary, to the hub of the bicycle.

In the other example shown in figures 2a and 2b, there is a hexagonal cavity 32 in the top of the base element, designed to allow the insertion of a hexagonal spanner (the so-called Alien key), while at the opposite end the shank 14 is threaded, allowing the direct fixing of the element 11 to the hub of the bicycle with the interposition of another element if necessary.

The coupling element 12 consists of a single body, advantageously in composite plastic material obtained by moulding, with a slot 16 in one longitudinal end and an expansion 17 with a substantially spherical configuration at the other end.

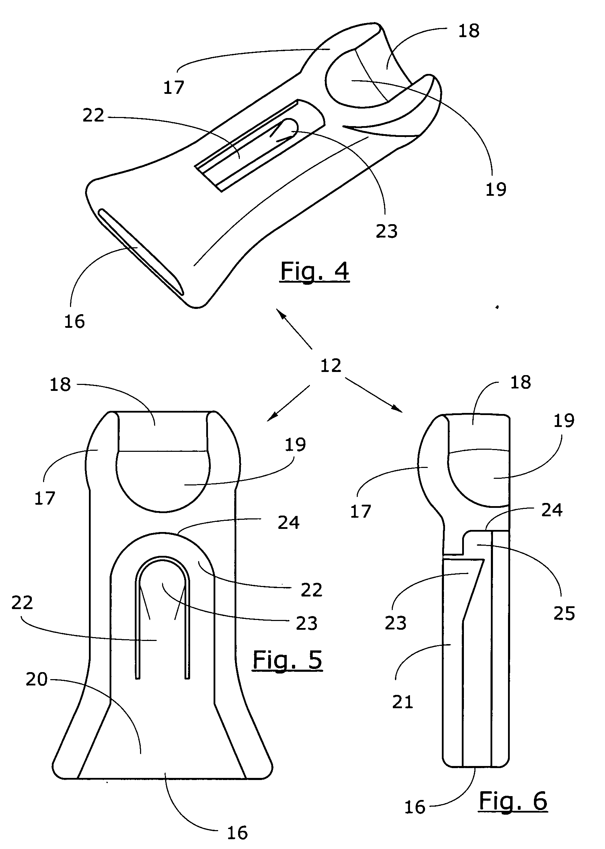

As can be seen in figure 4, the expansion 17 has a circular opening 18 providing access to a housing 19 designed to accommodate the head 13 of the base element 11.

The circular opening 18 has a slightly smaller diameter than the diameter of the housing 19 so that, together with the substantially spherical head 13 of the base element 11, it can form a snap-fit coupling that is achieved thanks to the deformability of the plastic material.

According to an embodiment not shown in the figures, the body of the expansion 17 of the element 12 can present a slit that allows better adaptability of the head 13 to the housing 19 within the moulding tolerances required for parts of this type.

With reference to figure 5, it can be seen that the slot 16 opens onto a prechamber 20, the width of which gradually decreases from the outside towards the inside of the coupling element 12, communicating with a blind cavity 21.

At the level of the prechamber 20, the outer body of the coupling element 12 is trapezoidal in plan.

The coupling element 12 comprises clamping means, for the mudguard support stays, which can consist of a protruding tab 22 overlapping part of the cavity 21 and presenting, at its free end, an enlargement 23 (figure 6) protruding towards the interior of the cavity 21.

The tab 22 is joined to the coupling element close to the prechamber 20 and presents the enlargement 23 which, together with the end wall 24 of the blind cavity 21, delimits a space 25 designed to accommodate a curved portion of the support stays advantageously consisting of a single bent bar.

The deformability of composite plastic material ensures easy insertion of the stays inside the blind cavity 21 thanks to the pressure exercised on the enlargement 23 and the consequent raising of the tab 22.

The tab drops back towards the cavity 21 when the curved portion of the bar forming the stays is housed in the space 25.

This clamping means ensures that one end of the support stays is secured inside the coupling element 12 while, in the event of an accident, the coupling element 12 tends to easily uncouple from the base element 11 thanks to the exit of the substantially spherical head 13 from its housing 19.

The invention is described above with reference to a preferred embodiment.

It is nevertheless clear that the invention is susceptible to numerous variations within the framework of technical equivalents.

## Claims

1. A device (10) for the coupling and rapid release of the support stays of a bicycle mudguard comprising a base element (11) which can be attached to the fork of a bicycle, and a coupling element (12) for a pair of stays designed to support a mudguard, **characterised in that** the base element comprises a substantially spherical head (13) designed to cooperate with a conjugated cavity (19) cut in the coupling element (12).

2. A device (10) according to claim 1, **characterised in that** the coupling element (12) comprises means for the elastic clamping of the stays.

3. A device (10) according to any of the foregoing claims, **characterised in that** the substantially spherical head (13) is made from composite plastic material or metal.

4. A device (10) according to claim 1 or 2, **characterised in that** the coupling element (12) is made from synthetic material.

5. A device (10) according to any of the foregoing claims, **characterised in that** the means for clamping the stays to the coupling element (12) consist of a protruding tab (22) overlapping part of the cavity (21) and equipped, at its free end, with an enlargement (23) protruding towards the inside of the cavity (21).

6. A device (10) according to any of the foregoing claims, **characterised in that** the coupling element (12) presents a prechamber (20), the width of which gradually decreases from the outside towards the inside of the coupling element (12), between the slot (16) and the cavity (21).

7. A device (10) according to any of the foregoing claims, **characterised in that** the body which encloses the conjugated cavity (19) presents a slit designed to improve the adaptability of the substantially spherical head (13) to the cavity (19).
